# EUROPEAN PATENT APPLICATION

(11) **EP 4 651 314 A1**
(43) Date of publication of application: **19.11.2025**
(21) Application number: 25176731.5
(22) Date of filing: 15.05.2025
(51) Int. Cl.: H01R 13/58, H01R 4/70, H01R 4/02, H01R 12/53, H01R 12/62, H01R 43/02, H01R 43/28

(54) **WIRE CONNECTION STRUCTURE, WIRE CONNECTION STRUCTURE MANUFACTURING METHOD, AND WIRE ASSEMBLY**

(30) Priority: 17.05.2024 JP 2024081292
(71) Applicant: Hirakawa Hewtech Corporation, Minato-ku Tokyo 108-0014 (JP)
(72) Inventor: NAKAMIGAWA, Hideki, Ibaraki, 306-0232 (JP)
(74) Representative: Goddar, Heinz J.

(57) **Abstract**

A wire connection structure for electrically connecting ends of a plurality of core wires, each of which is exposed by stripping a coating at an end region of each of a plurality of wires arranged in parallel, to terminals corresponding to the plurality of wires, includes a fixing member composed of a resin molded body that contacts outer circumference surfaces of the plurality of wires in a vicinity of the end region and fixes relative positions between the plurality of wires, with the plurality of wires being aligned parallel to each other in the vicinity of the end region, wherein a tearing portion that can be torn along a longitudinal direction of the wires for being extremely thin or is torn along the longitudinal direction is formed for each wire at a part of a region contacting the outer circumference surface.

## Description

### CROSS-REFERENCE TO RELATED APPLICATIONS

The present patent application claims the priority of Japanese patent application No. 2024-081292 filed on May 17, 2024, and the entire contents thereof are hereby incorporated by reference.

### TECHNICAL FIELD

This disclosure relates to a wire connection structure, wire connection structure manufacturing method, and wire assembly.

### BACKGROUND OF THE INVENTION

Recently, a manufacturing method of a transmission cable with a connector has been proposed to solve the problems of skew and pitch shift due to the misalignment of core wires in the length direction in the terminal processing of the transmission cable (See, for example, Patent Literature 1).

The manufacturing method of a transmission cable with a connector described in Patent Literature 1 includes cutting a round transmission cable having a plurality of insulated coated wires covered with an outer coating layer into a predetermined length, removing the outer coating layer by a predetermined length in an end area of the transmission cable, aligning the wires by placing the end tips of the plurality of insulated coated wires exposed outside against a butt end of a wire guiding jig (i.e., wire alignment jig) and fitting the insulated coated wires into recesses of the wire guiding jig, fixing the insulated coated wires at a position close to the wire guiding jig by a fixing means (tape with adhesive, adhesive, or hardened material by resin molding), removing the alignment jig, soldering the tip of the core wires to corresponding cable connection terminals on a connector wiring board, and then removing the fixing means. As a result, the transmission cable and the connector wiring board are connected conductively.

### Citation List

Patent Literature 1: JP2007-317676A

### SUMMARY OF THE INVENTION

According to the above conventional example, since the insulated coated wires drawn from one round cable are fixed by the fixing means, each insulated coated wire is fixed in a tilted state within the fixing means (i.e., in a state where bending stress remains), and when the wire guiding jig is removed, the position of the tip of the core wire may shift due to bending stress. This makes it difficult to achieve a high-density electrical connection at the end of the core wire. Further, in recent years, as semiconductors incorporated in electronic components and devices have become more highly integrated and multifunctional, there has been a demand for higher density of terminals (also called pads) in connectors and boards for communication between semiconductors and the outside and for communication using various wires with different applications and wire diameters. As the number of core wires increases, when defects such as poor connection of ends of the core wires or poor terminal processing to strip the outer sheath occur after fixing the insulated coated wires, it is desirable to be able to replace only those insulated coated wires that have such defects, rather than replacing all the insulated coated wires.

The object of the present invention is to provide a wire connection structure, a wire connection structure manufacturing method, and a wire assembly that enable high-density electrical connection between ends of exposed core wires in an end region of wires including electric wires, cables, etc., and terminals in a connection target, and that enables replacement of only defective wires after fixing the plurality of wires.

For solving the above problem, the first aspect of the present invention provides a wire connection structure for electrically connecting ends of a plurality of core wires, each of which is exposed by stripping a coating at an end region of each of a plurality of wires arranged in parallel, to terminals corresponding to the plurality of wires, comprising:
a fixing member comprising a resin molded body that contacts outer circumference surfaces of the plurality of wires in a vicinity of the end region and fixes relative positions between the plurality of wires, with the plurality of wires being aligned parallel to each other in the vicinity of the end region,
wherein a tearing portion that can be torn along a longitudinal direction of the wires for being extremely thin or is torn along the longitudinal direction is formed for each wire at a part of a region contacting the outer circumference surface.

The second aspect of the invention provides the wire connection structure, according to the first aspect, wherein the plurality of wires are arranged in parallel in respective layers, and wherein the fixing member comprises fixing members provided for the respective layers.

The third aspect of the invention provides the wire connection structure, according to the second aspect, wherein the fixing members for the respective layers have a same outer size.

The fourth aspect of the invention provides the wire connection structure, according to the first aspect, further comprising:
a sealing member that covers the fixing member and watertightly seals a connection portion between the terminals and the ends of the plurality of core wires.

The fifth aspect of the invention provides the wire connection structure, according to the third aspect, further comprising:
a sealing member that collectively covers the respective fixing members provided in the respective layers and watertightly seals a connection portion between the terminals and the ends of the plurality of core wires.

The sixth aspect of the invention provides the wire connection structure, according to the first aspect, wherein the plurality of wires include a cable comprising two insulated wires, a drain wire, a shield layer that collectively covers an outer circumference of the two insulated wires and the drain wire, and an outer sheath composed of an insulating material that covers an outer circumference of the shield layer,
wherein the two insulated wires and the drain wire are arranged in a same direction as the plurality of wires are arranged in parallel, and the drain wire is located next to the two insulated wires.

The seventh aspect of the invention provides the wire connection structure, according to the first aspect, wherein the terminals are arranged at a predetermined pitch on a same line along a direction in which the plurality of wires are paralleled,
wherein the plurality of wires are divided into at least two wire groups so that a pitch of wires is wider than a pitch of the terminals,
wherein the fixing member is divided into at least a first member and a second member that fix relative positions between the wires constituting the at least two wire groups, respectively.

The eighth aspect of the invention provides a manufacturing method of a wire connection structure for electrically connecting ends of a plurality of core wires, each of which is exposed by stripping a coating at an end region of each of a plurality of wires arranged in parallel, to terminals corresponding to the plurality of wires, the manufacturing method comprising:
arranging a pair of wire guiding jigs having a plurality of wire guiding grooves formed to correspond to respective outer diameters of the plurality of wires at a predetermined distance;
aligning the plurality of wires parallel to each other in the end region by placing the plurality of wires in the plurality of wire guiding grooves so that a vicinity of the end region is located between the pair of wire guiding jigs;
forming a fixing member by resin molding between the pair of wire guiding jigs to contact outer circumference surfaces of the plurality of wires in the vicinity of the end region and to form a tearing portion that can be torn along a longitudinal direction of the wires for being extremely thin or is torn along the longitudinal direction for each wire at a part of a region contacting the outer circumference surface, to fix relative positions between the plurality of wires;
removing the pair of wire guiding jigs from the plurality of wires; and
cutting the plurality of wires at a predetermined length position from the fixing member, stripping a coating at the end region of the plurality of wires on a cut side to expose the plurality of core wires, and connecting exposed ends of the plurality of core wires to the terminals,
wherein the cutting, stripping, and connecting are performed before or after the forming of the fixing member.

The ninth aspect of the invention provides the manufacturing method, according to the eighth aspect, wherein an injection mold having a space corresponding to the fixing member as a cavity is used as a base mold, and the pair of wire guiding jigs are used as a nest device to fit into the base mold to form the fixing member by injection molding.

The tenth aspect of the invention provides a wire assembly, comprising:
a plurality of wires arranged in parallel;
a connection target having a plurality of terminals to which ends of a plurality of core wires exposed by stripping a coating at an end region of each of the plurality of wires are electrically connected;
a fixing member comprising a resin molded body that contacts outer circumference surfaces of the plurality of wires in a vicinity of the end region and fixes relative positions between the plurality of wires, with the plurality of wires being aligned parallel to each other in the vicinity of the end region,
wherein a tearing portion that can be torn along a longitudinal direction of the wires for being extremely thin or is torn along the longitudinal direction is formed for each wire at a part of a region contacting the outer circumference surface.

### Advantageous Effects of the Invention

According to the present invention, it is possible to provide a wire connection structure, a wire connection structure manufacturing method, and a wire assembly that enable high-density electrical connection between ends of exposed core wires in an end region of wires including electric wires, cables, etc., and terminals in a connection target, and that enables replacement of only defective wires after fixing the plurality of wires.

### BRIEF DESCRIPTION OF DRAWINGS

FIG. 1 is a plan view of a wire connection structure in the first embodiment of the invention.
FIG. 2 is a cross-sectional view along A-A line in FIG. 1.
FIG. 3A is a cross-sectional view along B-B line in FIG. 2, FIG. 3B is a detailed view of part C of FIG. 3A, FIGS. 3C and 3D are detailed views of the part C showing an example of the variation in the shape of tearing portion of a fixing member.
FIG. 4 is a plan view showing a state where a plurality of insulated wires are aligned by a pair of wire guiding jigs.
FIG. 5A is a front view of an example of a wire guiding jig, FIG. 5B is a detailed view of part C of FIG. 5A, and FIG. 5C is a diagram showing the insulated wires placed in wire guiding grooves of the wire guiding jig shown in FIG. 5B.
FIGS. 6A to 6D show an example of a fixing member-mold, wherein FIG. 6A is a cross-sectional view along E-E line in FIG. 6B, FIG. 6B is a cross-sectional view along the X-direction, FIG. 6C is a cross-sectional view along F-F line in FIG. 6B, and FIG. 6D is a cross-sectional view along G-G line in FIG. 6B.
FIG. 7 is a plan view of fixing members formed between the wire guiding jig.
FIG. 8 is a plan view showing a cutting step of the plurality of insulated wires.
FIG. 9A is a plan view showing a stripping step of the plurality of insulated wires, FIGS. 9B and 9C are diagrams showing the replacement of a defective insulated wire.
FIGS. 10A to 10D are main part front views of wire guiding jigs in modified examples 1 to 4.
FIG. 11 is a plan view showing a wire connection structure in the second embodiment of the invention.
FIG. 12 is a cross-sectional view corresponding to FIG. 3A.
FIG. 13 is a plan view showing a wire connection structure in the third embodiment of the invention.
FIG. 14 is a main part cross-sectional view corresponding to FIG. 3A.
FIG. 15 is a plan view showing an example of an insulated wire used in a wire connection structure in the fourth embodiment of the invention.
FIG. 16 is a front view of the wire guiding jig used in the fourth embodiment, viewed from the end of the insulated wire.
FIG. 17 is a cross-sectional view of the fixing member along the Y-direction in the fourth embodiment of the invention.
FIG. 18 is a cross-sectional view of a cable in the fifth embodiment of the invention.

### DETAILED DESCRIPTION OF THE INVENTION

### [Embodiments]

Next, the embodiments will be described with reference to the appended drawings. In each of the figures, the same symbols are used for components that have substantially the same functions in the figures, and redundant descriptions are omitted.

### [First embodiment]

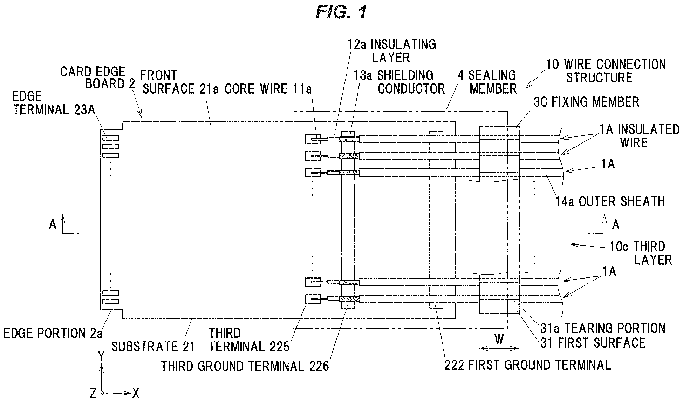

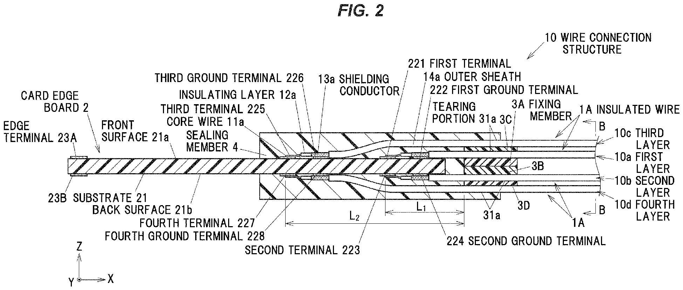

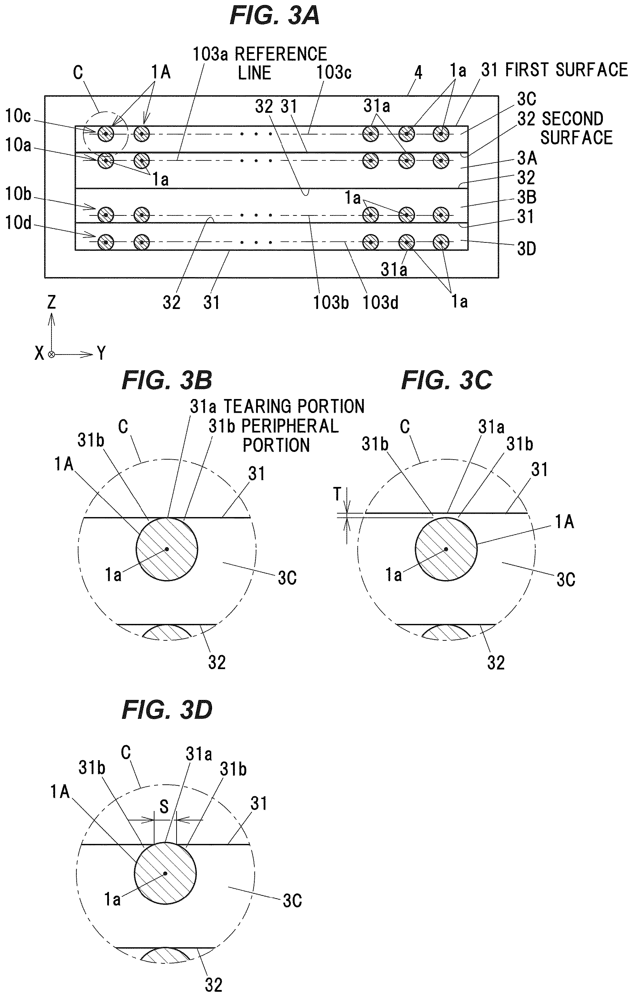

FIG. 1 is a plan view of a wire connection structure in the first embodiment of the invention. FIG. 2 is a cross-sectional view along A-A line in FIG. 1. FIG. 3A is a cross-sectional view along B-B line in FIG. 2, FIG. 3B is a detailed view of part C of FIG. 3A, FIGS. 3C and 3D are detailed views of the part C showing an example of the variation in the shape of tearing portion of a fixing member.

FIGS. 1 and 2 show the case where a connector as a connection target is connected to one end of a plurality of wires. The connection target is not limited to connectors, but may be a board (i.e., substrate) or other connection target. For example, the connector as a connection target includes a connector that connects wires to a card edge board (i.e., card edge substrate), a connector that connects wires to a board on which a plug connector or receptacle connector is mounted, and a connector that connects wires directly to connector terminals (pin headers, socket terminals, cup terminals, etc.), and the like. The types of mounting a plug connector or receptacle connector on a board include SMT (surface mounting), DIP (soldering the leads of components inserted into through-holes in the board), press-fit (press-fitting into through-holes in the board), and other methods. For the boards as a connection target include, for example, boards to which wires are connected directly, such as PCB (printed circuit board), FPC (flexible printed circuit board), circuit board, control board, relay board, etc. Connectors may be connected to both ends of the plurality of wires, boards may be connected to both ends of the plurality of wires, or a connector may be connected to one ends of the plurality of wires and a board may be connected to the other ends of the plurality of wires. FIGS. 1 and 2 do not show solder for electrically connecting core wires and shield terminals to terminals (also called "pads"). In the present specification and the drawings, the longitudinal direction of the plurality of wires is the X-direction, the direction in which the plurality of wires are arranged in parallel is the Y-direction, and the direction orthogonal to the X- and Y-directions is the Z-direction.

In the present specification, "wires" is a concept that encompasses electric wires and cables, and includes a single electric wire (also called "insulated wire"), and a cable composed of a plurality of wires bundled together and covered with an insulating outer sheath around the periphery. In the present specification, the "end region" refers to the area where the plurality of wires are stripped for connection to the terminals of the connection target (connector, board, etc.) to which the plurality of wires are connected. A configuration in which a connector or board is connected to one end or both ends of the plurality of wires constitutes a wire assembly.

A wire connection structure 10 includes a plurality of insulated wires (i.e., insulated electric wires) 1A (in FIG. 1, only a third layer 10c is illustrated) arranged in parallel in the Y-direction at multiple locations (four locations in FIG. 2), a card edge board 2 to which ends, etc. of the plurality of insulated wires 1A are connected by solder (not shown) and having an edge portion 2a serving as a card edge connector at its tip, a plurality (e.g., four) of fixing members 3A to 3D (collectively referred to as "fixing members 3") to fix relative positions between the insulated wires 1A layer by layer, and a sealing member 4 (illustrated with an imaginary line in FIG. 1) that covers the fixing members 3A to 3D and watertightly covers connection portions between core wires 11a of the plurality of insulated wires 1A and the corresponding plurality of terminals 221 to 228. Here, the insulated wire 1A is an example of "wires" or "wiring members".

As a method of fixing a plurality of wires arranged in parallel near the end area, a method of sandwiching a plurality of cables (insulated wires) between two ground bars (see, e.g., JP2008-181817A) and a method of sandwiching a plurality of cables (insulated wires) between two tapes (see, e.g., JP2019-67519A) have been known. In the method of sandwiching the plurality of cables with ground bars, solder is used to fill the space between the ground bars and the cables, so that the gap between the cables and the ground bars becomes uneven when the outer diameters of the cables are different, and uniform bonding force between the cables cannot be obtained. In the method of sandwiching the cables with tapes, when the outer diameters of the cables differ, the contact area between the cable with the smaller outer diameter and the tape becomes smaller, and with the added weight difference of the cables, a uniform bonding force between the cables cannot be obtained. Further, in the aforementioned method of fixing insulated coated wires drawn from one round cable by a fixing means (see JP2007-317676A), each insulated coated wire is fixed in a tilted state (bending stress remains) in the fixing means. Therefore, when the wire guiding jig is removed, there is a possibility that the positions of the tips of the core wires may shift due to bending stress.

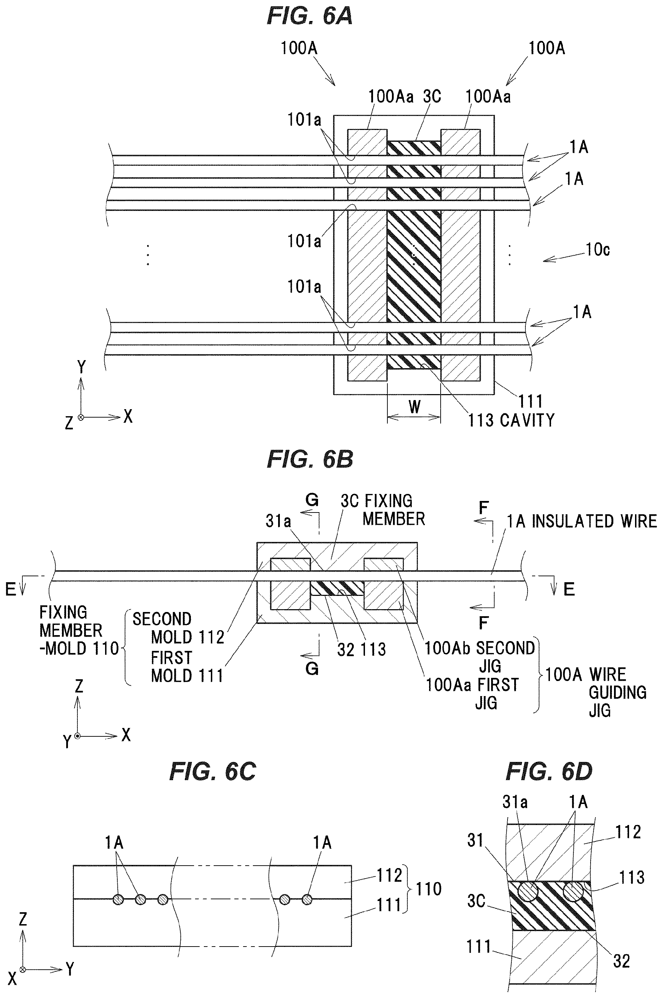

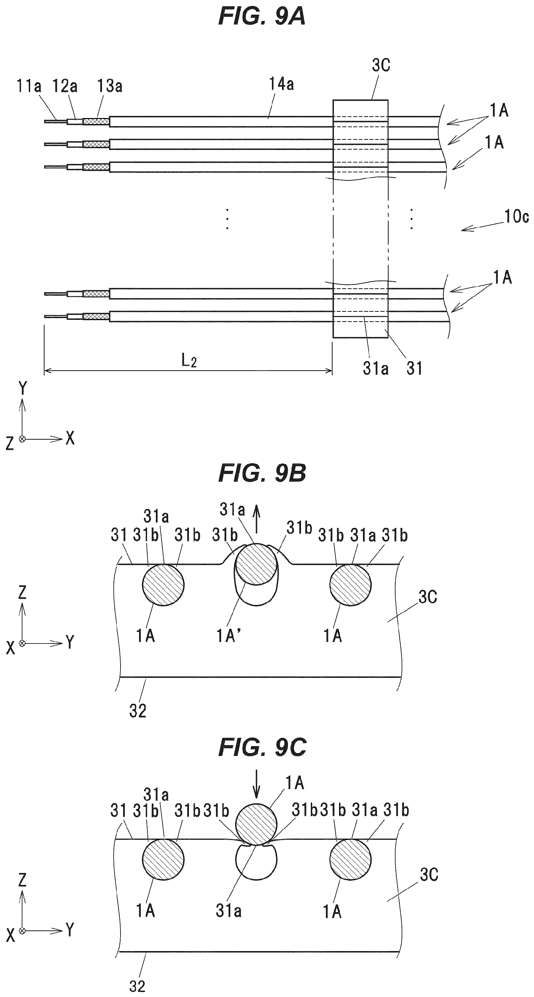

The fixing member 3 in the present embodiment is formed by resin molding to contact outer circumference surfaces of the plurality of insulated wires 1A and fix the relative positions between the insulated wires 1A, while the plurality of insulated wires 1A are aligned parallel to each other by a pair of wire guiding jigs as described below (see FIGS. 6A to 6C). By forming the fixing member 3 in this manner, the insulated wires 1A are not subjected to residual bending stress, and thus, misalignment of the tips of the core wires 11a after the wire guiding jig is removed can be suppressed. Since the fixing member 3 is formed to contact the outer circumference surfaces of the insulated wires 1A, the insulated wires 1A with different outer diameters can be fixed at an arbitrary pitch. When the number of core wires increases, if defects such as poor connection of the ends of the core wires or poor terminal processing to strip the outer sheath occur after fixing the plurality of insulated wires 1A by the fixing member 3, it will not be productive to remake the fixing member 3 . Therefore, in order to replace only the insulated wire 1A where such defects have occurred, as shown in FIG. 1 and FIGS. 3A to 3D, a tearing portion 31a that can be torn along the X-direction for being extremely thin or is torn along the X-direction is formed for each insulated wire 1A, in part of a region of the fixing member 3 contacting the outer circumference surface of the insulated wire 1A. This allows only the defective insulated wire 1A' to be removed from the tearing portion 31a, as shown in FIG. 9B, and a new insulated wire 1A to be inserted from its tearing portion 31a, as shown in FIG. 9C, without having to remake the fixing member 3. Details of the tearing portion 31a of the fixing member 3 are described below.

Although the present embodiment shows one end side of the plurality of insulated wires 1A, each of both ends may be configured to be connected to a connector, for example, to a card edge board 2. The plurality of insulated wires 1A may be arranged in parallel in the Y-direction in any one, two, or three of the four, i.e., first to fourth layers 10a to 10d, or in five or more layers, respectively. In the present embodiment, terminals 221 to 228 (see FIG. 2) of the card edge board 2 of the connector are shown as an example of the connection target of the core wires 11a of the insulated wires 1A, but the terminals of a board other than the connector may be the connection target. The sealing member 4 does not cover the entire fixing members 3A to 3D, but it may cover the entire fixing members 3A to 3D. If there is no need to cover the connection between the core wires 11a and shielding conductors 13A and the terminals 221 to 228 watertightly by the sealing member 4, the sealing member 4 may not be provided.

### (Configuration of insulated wires)

The plurality of insulated wires 1A have the same outer diameter and are arranged in parallel at the same pitch in the Y-direction at the fixing member 3. The insulated wire 1A is, for example, a coaxial wire and has a core wire 11a formed from a conductor, an insulating layer 12a covering an outer circumference of the core wire 11a, a shielding conductor 13a formed on an outer circumference of the insulating layer 12a, and an outer sheath 14a formed from an insulating material covering an outer circumference of the shielding conductor 13a. The core wire 11a may be a single wire (i.e., solid wire) or a stranded wire composed of a plurality of strands twisted together. The insulating layer 12a may be formed from, e.g., polyethylene resin (low-density polyethylene, high-density polyethylene, etc.), fluorine resin, etc. The shielding conductor 13a may be composed of conductive tape spirally wound around the outer circumference of the insulating layer 12a, or longitudinally wrapped along the longitudinal direction of the insulated wire 1A, or by spiral winding or braiding with strands. The outer sheath 14a may be formed from, e.g., fluorocarbon resin, polyvinyl chloride (PVC), polyester resin, or the like.

The plurality of insulated wires 1A may have different outer diameters. In the fixing member 3, the plurality of insulated wires 1A may be arranged in parallel at different pitches in the Y-direction according to the outer diameter of the insulated wires 1A, etc., and the outer sheaths 14a of adjacent insulated wires 1A may contact each other. The insulated wires 1A may be other insulated wires such as single wires (i.e., solid wires). The wires to be fixed by one fixing member 3 may consist only of insulated wires, as in the present embodiment, but may also comprise a mixture of insulated wires and cables, may comprise only cables, and may comprise other linear members such as drain wires in addition to insulated wires and cables. Although the plurality of insulated wires 1A are arranged in parallel in the Y-direction in the vicinity of the fixing member 3 in FIGS. 1 and 2, they may not be arranged in parallel in the Y-direction at a distance from (i.e., far from) the fixing member 3, and may be bundled in an oval or circular shape by, e.g., a binding band.

The core wires 11a of the insulated wire 1A disposed in the first layer 10a and the second layer 10b have their tips at a distance L1 from the fixing member 3, and the core wires 11a of the insulated wire 1A disposed in the third layer 10c and the fourth layer 10d have their tips at a distance L2 (however, L2 > L1) from the fixing member 3.

### (Configuration of card edge board)

The card edge board 2 has a substrate 21 formed from insulating material, a plurality of first terminals 221, a first ground terminal 222, a plurality of second terminals 223, and a second ground terminal 224 formed on a front surface 21a of the substrate 21, a plurality of third terminals 225, a third ground terminal 226, a plurality of fourth terminals 227, and a fourth ground terminal 228 formed on a back surface 21b of the substrate 21.

The plurality of first terminals 221 and the first ground terminal 222 formed on the front surface 21a correspond to the plurality of insulated wires 1A disposed in the first layer 10a. The plurality of second terminals 223 and the second ground terminal 224 formed on the back surface 21b correspond to the plurality of insulated wires 1A disposed in the second layer 10b. The plurality of third terminals 225 and the third ground terminal 226 formed on the front surface 21a correspond to the plurality of insulated wires 1A disposed in the third layer 10c. The plurality of fourth terminals 227 and the fourth ground terminal 228 formed on the back surface 21b correspond to the plurality of insulated wires 1A disposed in the fourth layer 10d. The number of the first terminals 221 and the number of the third terminals 225 are the same in the present embodiment, but may be different from each other. The position of the first terminals 221 in the Y-direction and the position of the third terminals 225 in the Y-direction are the same in the present embodiment, but may be different from each other. The number of the second terminals 223 and the number of the fourth terminals 227 are the same in the present embodiment, but may be different from each other. The position of the second terminals 223 in the Y-direction and the position of the fourth terminals 227 in the Y-direction are the same in the present embodiment, but may be different from each other.

The card edge board 2 has an edge portion 2a whose tip side serves as a card edge connector inserted into a female connector (not shown), and a plurality of edge terminals 23A are formed on the front surface 21a of the substrate 21 at the edge portion 2a, and a plurality of edge terminals 23B are formed on the back surface 21b of the substrate 21 at the edge portion 2a.

In the card edge board 2, the terminals 221 to 228 formed on the front surface 21a and the back surface 21b of the substrate 21 and the edge terminals 23A, 23B formed on the front surface 21a and the back surface 21b of the edge portion 2a are connected via wiring patterns (not shown) formed on the front surface 21a and the back surface 21b of the substrate 21.

### (Configuration of fixing member)

The fixing member 3 has a rectangular parallelepiped shape (cuboid) extending in the Y-direction with a width W in the X-direction. The fixing member 3 is formed from a resin material (e.g., polyamide resin, ABS, etc.) by resin molding (e.g., injection molding, compression molding, extrusion molding, calendering, transfer molding, lamination molding, etc.). The resin that constitutes the fixing member 3 is not limited to injection molding resins. Thermosensitive adhesives (such as hot melt adhesives), moisture curing adhesives (such as reactive hot melt adhesives), light curing resins (such as UV curable resins, visible light curable resins), two component reactive adhesives, and the like may be used to form the fixing member 3 by coating and curing. The fixing member 3 may be formed by coating and curing these materials. The portions divided by reference lines 103a to 103d may be formed by resin molding or machining, respectively, and these portions may be bonded by adhesion or fusion across the insulated wire 1A. When polyamide resin is used as the resin for injection molding, low-pressure and low-temperature (e.g., about 200°C) injection molding is possible because polyamide resin has low melt viscosity.

The width W in the X-direction is preferably a certain width to keep the center lines 1a of the insulated wires 1A parallel to each other after the wire guiding jig 100A is removed. Specifically, when the maximum outer diameter of the wires is Dmax, for example, Dmax≤W, 1.5Dmax≤W, 2Dmax≤W, and the like are preferred. The thickness in the Z-direction should be greater than or equal to the maximum outer diameter of the wires, but the outer sheath of the wires may be partially exposed.

As shown in FIG. 3A, the fixing member 3A corresponding to the first layer 10a and the fixing member 3B corresponding to the second layer 10b have the same outer size and are formed so that the reference lines 103a, 103b are eccentrically located relative to the center of thickness in the Z-direction. The fixing member 3C corresponding to the third layer 10c and the fixing member 3D corresponding to the fourth layer 10d have the same outer size and are formed so that the reference lines 103c, 103d are located at the center of the thickness in the Z-direction. The fixing members 3A, 3B corresponding to the first layer 10a and the second layer 10b may have the same outer size as the fixing members 3C, 3D corresponding to the third layer 10c and the fourth layer 10d. This allows the molds for forming the fixing members 3 to be shared.

The fixing member 3 has a tearing portion 31a formed for each insulated wire 1A, which can be torn along the X-direction or is torn along the X-direction due to its ultra-thinness in a part of the region in contact with the outer circumference surface of the insulated wire 1A. The fixing member 3 has a first surface 31 on which the tearing portion 31a is formed and a second surface 32 formed on the opposite side of the first surface 31. The tearing portions 31a does not necessarily need to be torn beforehand, but need only be extremely thin (e.g., 0.1 mm or less) so that the corresponding tearing portion 31a can be torn over the entire length in the X-direction when the insulated wire 1A is replaced. The tearing portion 31a may be pre-torn and open along the X-direction, exposing the outer sheath 14a of the insulated wire 1A. In this case, the width (distance S) of the opening in the Y-direction is preferably smaller than the outer diameter of the insulated wire 1A to prevent the insulated wire 1A from popping out.

As a specific example, the fixing member 3 may be formed so that the outer circumference surface of the insulated wire 1A contacts the first surface 31 and the thickness of the tearing portion 31a is 0 mm, as shown in FIG. 3B, for example. Due to variations in the shape of the tearing portion 31a, as shown in FIG. 3C, a pair of peripheral portions 31b of the tearing portion 31a may be connected and the tearing portion 31a may be extremely thin (thickness T is, e.g., 0.1 mm or less), or as shown in FIG. 3D, the tearing portion 31a may be torn apart and a pair of peripheral portions 31b may be separated (distance S is, e.g., 0.2 mm or less), the outer circumference surface of the insulated wire 1A may be exposed. The above thickness T and distance S are not limited to the above values.

### (Configuration of sealing member)

The sealing member 4 has a rectangular parallelepiped (cuboid) body to cover a region including four fixing members 3A to 3D, the connection portions between the core wires 11a of the insulated wires 1A and the terminals 221, 223, 225, 227 of the card edge board 2, the connection portions between the shielding conductors 13a of the insulated wires 1A and the ground terminals 222, 224, 226, 228 of the card edge board 2. The sealing member 4 can be formed in the same way as the fixing member 3. That is, the sealing member 4 is formed by resin molding (e.g., injection molding, compression molding, extrusion molding, calendering, transfer molding, lamination molding, etc.) from resin material (e.g., polyamide resin, ABS, etc.). The resin that constitutes the sealing member 4 is not limited to injection molding resins. Thermosensitive adhesives (such as hot melt adhesives), moisture curing adhesives (such as reactive hot melt adhesives), light curing resins (such as UV curable resins, visible light curable resins), two component reactive adhesives, and the like may be used to form the sealing member 4 by coating and curing. In addition, portions divided at a position corresponding to the center of the thickness of the card edge board 2 may be formed by resin molding or machining, respectively, and the fixing members 3A to 3D may be sandwiched between them and joined by adhesion or fusion bonding. When polyamide resin is used as the resin for injection molding, low-pressure and low-temperature (e.g., about 200°C) injection molding is possible because polyamide resin has low melt viscosity.

### (Method of connecting the ends of insulated wires)

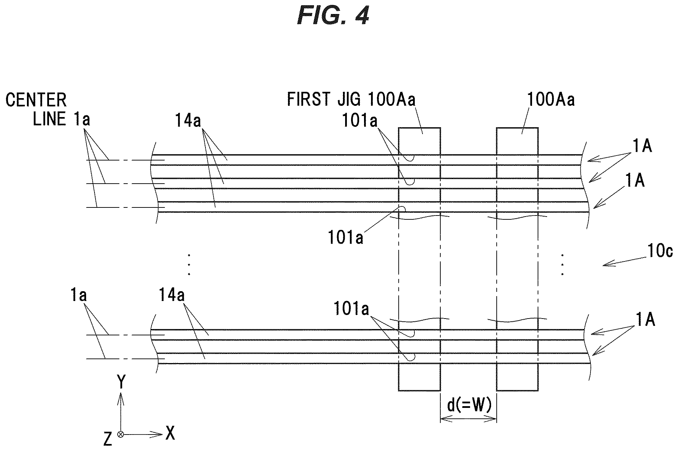

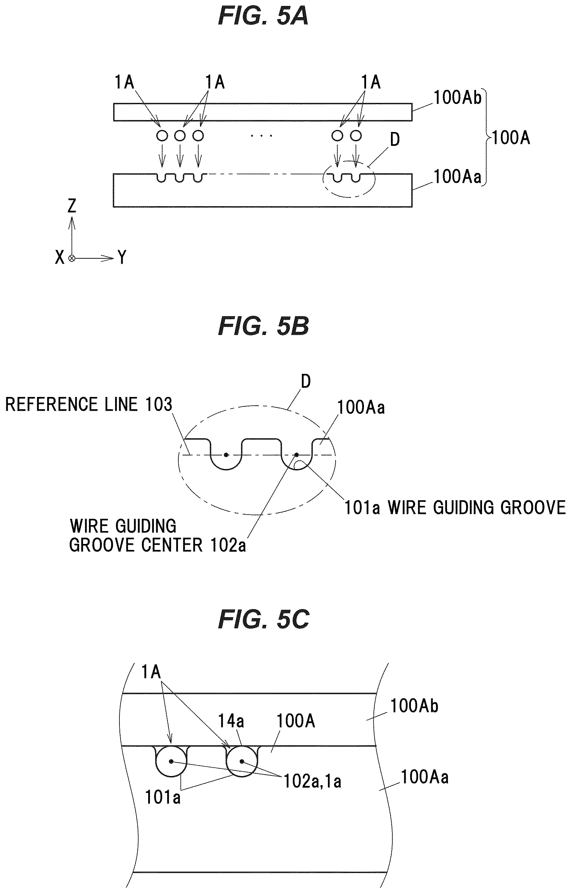

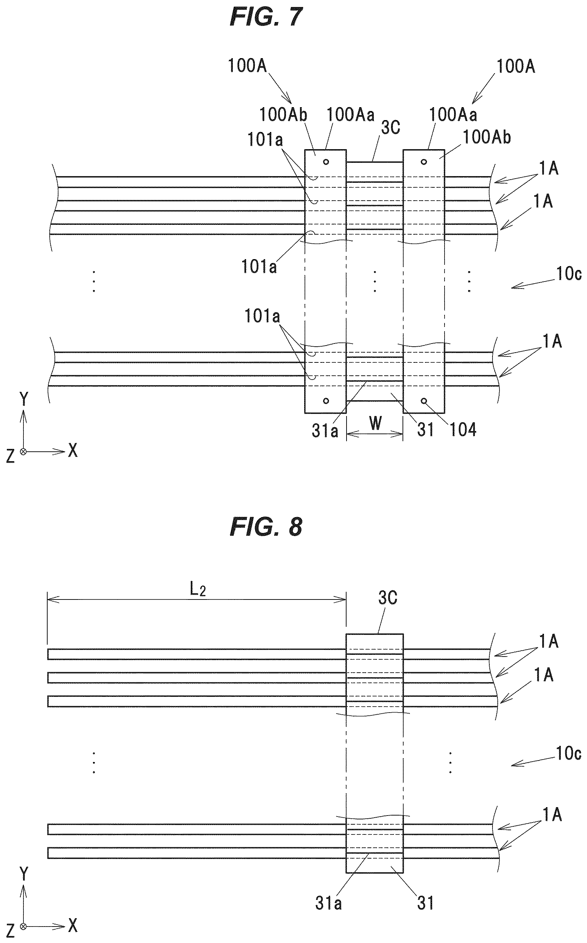

Next, an example of a method of connecting the ends of the insulated wires will be described with reference to FIGS. 4 to 9C. FIG. 4 is a plan view showing a state where a plurality of insulated wires are aligned by a pair of wire guiding jigs. FIG. 5A is a front view of an example of a wire guiding jig, FIG. 5B is a detailed view of part C of FIG. 5A, and FIG. 5C is a diagram showing the insulated wires placed in wire guiding grooves of the wire guiding jig shown in FIG. 5B. FIGS. 6A to 6D show an example of a fixing member-mold, wherein FIG. 6A is a cross-sectional view along E-E line in FIG. 6B, FIG. 6B is a cross-sectional view along the X-direction, FIG. 6C is a cross-sectional view along F-F line in FIG. 6B, and FIG. 6D is a cross-sectional view along G-G line in FIG. 6B. FIG. 7 is a plan view of fixing members formed between the wire guiding jig. FIG. 8 is a plan view showing a cutting step of the plurality of insulated wires. FIG. 9A is a plan view showing a stripping step of the plurality of insulated wires, FIGS. 9B and 9C are diagrams showing the replacement of a defective insulated wire. The following describes a case in which the insulated wires 1A are cut and stripped after forming the fixing member 3. However, the insulated wires 1A may be cut and stripped before forming the fixing member 3. When the pitch of the insulated wires 1A in the Y-direction is relatively small, the cutting and stripping steps of the insulated wires 1A can be performed more accurately by forming the fixing member 3 after the cutting and stripping steps of the insulated wires 1A are performed.

### (1) Arrangement of wire guiding jigs

As shown in FIG. 4, a first jig 100Aa (see FIG. 5A) of the pair of wire guiding jigs 100A is placed in the X-direction with a spacing d equal to the width W. The wire guiding jig 100A has the first jig 100Aa with a plurality of wire guiding grooves 101a and a second jig 100Ab, which is a flat rectangular bar without wire guiding grooves, as shown in FIG. 5A. As shown in FIG. 5B, the wire guiding grooves 101a have a substantially U-shape, the depth (Z-direction) and the width (Y-direction) are the same as the outer diameter of the insulated wire 1A, and the bottom surface is formed as a semicircle with a wire guiding groove center 102a. The radius of the bottom surface of the wire guiding groove 101a is 1/2 of the outer diameter of the insulated wire 1A. Each wire guiding groove center 102a is set on one reference line 103 extending in the Y-direction. As a result, the center line 1a of each insulated wire 1A after alignment coincides with the wire guiding groove center 102a. The spacing d is an example of a predetermined distance.

The center line 1a of the insulated wire 1A does not have to be aligned with the reference line 103. For example, the wire guiding grooves 101a may be formed so that the tangent lines tangent to the outer circumference surface of the core wires 11a and facing the card edge board 2 are matched between the insulated wires 1A. This facilitates electrical connection of the core wires 11a to the terminals 221, 223, 225, 227 because the tangent lines tangent to the outer circumference surface of the core wires 11a and facing the card edge board 2 are matched between the insulated wires 1A.

### (2) Arrangement of insulated wires

Next, the insulated wires 1A are placed respectively in the wire guiding grooves 101a of the first jig 100Aa of the pair of wire guiding jigs 100A, the insulated wires 1A are pressed down with the second jig 100Ab from above, and the second jig 100Ab is attached to the first jig 100Aa using fastening members (for example, bolts) 104 (see FIG. 7). At this stage, the ends of the insulated wires 1A are not yet exposed. Instead of the fastening member 104, a press from above or below or from the left or right for attaching the die to the molding machine, or a press with a vice or toggle clamp mechanism may be used.

### (3) Fixing member formation

Next, as shown in FIGS. 6A to 6D, a fixing member-mold (i.e., mold for fixing member) 110 having a cavity 113 (first space) corresponding to the fixing member 3 is placed around the insulated wires 1A between the pair of wire guiding jigs 100A. The fixing member-mold 110 is used as a base mold, and the wire guiding jig 100A is used as a nesting device to be fitted into the base mold. The fixing member-mold 110 has a first mold 111 and a second mold 112 with a two-part structure. The fixing member-mold 110 omits illustration of the sprue, etc., which is the inlet of the molten resin. The pair of wire guiding jigs 100A, in which the plurality of insulated wires 1A are aligned, are placed in the first mold 111, and the second mold 112 is attached to the first mold 111.

Next, molten first resin (e.g., polyamide resin) is injected into the cavity 113 (first space), and after the first resin cools and solidifies, the solidified molded product is released from the fixing member-mold 110. At this time, the wire guiding jig 100A is removed from the insulated wires 1A. Thereby, for example, the fixing member 3C for the third layer 10c is formed. The fixing member 3D for the fourth layer 10d can also be formed using the fixing member-mold 110 shown in FIGS. 6A to 6C. For the fixing member 3A for the first layer 10a and the fixing member 3B for the second layer 10b, the corresponding fixing member-molds for their shapes are used. As shown in FIG. 5C, there is a gap between the wire guiding grooves 101a and the insulated wires 1A, and molten resin may enter there, but that part can be removed by cutting or other means after forming the fixing member 3C.

### (4) Cutting of insulated wires

Next, as shown in FIG. 8, the insulated wires 1A are cut at a distance L2 from the fixing member 3C to prepare the insulated wires 1A before the stripping step for the third layer 10c. Similarly, the above insulated wires 1A are placed, the fixing member 3D is formed, and the insulated wires 1A are cut at the distance L2 from the fixing member 3D to prepare the insulated wires 1A before the stripping step for the fourth layer 10d. Similarly, the above insulated wires 1A are placed, the fixing member 3A is formed, and the insulated wires 1A are cut at a distance L1 from the fixing member 3A to prepare the insulated wires 1A before the stripping step for the first layer 10a. Similarly, the insulated wires 1A above are placed, the fixing member 3B is formed, and the insulated wires 1A are cut at the distance L1 from the fixing member 3B to prepare the insulated wires 1A before the stripping step for the second layer 10b.

### (5) Stripping of insulated wires

Next, the insulated wire 1A is stripped to expose the shielding conductor 13a, the insulating layer 12a, and the core wire 11a sequentially from the outer sheath 14a, as shown in FIG. 9. This produces, for example, the insulated wires 1A for the third layer 10c. Similarly, the insulated wires 1A for the first layer 10a, the second layer 10b, and the fourth layer 10d are also stripped to produce the insulated wires 1A for the first layer 10a, the second layer 10b, and the fourth layer 10d.

### (6) Connection of core wires, etc.

Next, the core wire 11a of the insulated wire 1A in the first layer 10a is soldered to the first terminal 221, and the shielding conductor 13a is soldered to the first ground terminal 222. The core wire 11a of the insulated wire 1A in the second layer 10b is soldered to the second terminal 223, and the shielding conductor 13a is soldered to the second ground terminal 224. The core wire 11a of the insulated wire 1A in the third layer 10c is soldered to the third terminal 225, and the shielding conductor 13a is soldered to the third ground terminal 226. The core wire 11a of the insulated wire 1A in the fourth layer 10d is soldered to the fourth terminal 227, and the shielding conductor 13a is soldered to the fourth ground terminal 228.

### (7) Formation of sealing member

Next, a sealing member-mold (i.e., mold for sealing member, not shown) with a second space corresponding to the sealing member 4 is placed around the card edge board 2 and the fixing member 3. Next, molten second resin (e.g., polyamide resin) is injected into the second space, and after the second resin cools and solidifies, the sealing member-mold is released. This forms the sealing member 4 made of the second resin.

### (8) Replacement of insulated wire

Here, the case where only the defective insulated wire 1A is replaced is explained with reference to FIGS. 9A to 9C.

In the case where, after fixing the plurality of insulated wires 1A by the fixing member 3, a defect occurs, such as poor connection of the terminals of the core wire or poor terminal processing to strip the outer sheath 14a, only the defective insulated wire 1A' is removed from the tearing portion 31a, as shown in FIG. 9B, and as shown in FIG. 9C, a new insulated wire 1A is inserted into the cavity from its tearing portion 31a. This eliminates the need to remake the fixing member 3 and improves productivity. The defective insulated wire 1A' may be pulled out in the X-direction, and a new insulated wire 1A may be inserted into the cavity of the fixing member 3 from the X-direction.

### (Effects of the first embodiment)

The following effects are achieved by this implementation.
(a) Since the plurality of insulated wires 1A are fixed parallel to each other by the fixing member 3 in the vicinity of the end region, even when the outer diameters of the insulated wires 1A differ, a high-density electrical connection can be made between the terminals of the exposed core wires 11a in the end region of the insulated wires 1A and the terminals of the connection target (connector, board, etc.).
(b) After fixing the plurality of insulated wires 1A by the fixing member 3, the tips can be cut, stripped, connected, and the like in a batch with high precision and ease.
(c) When the outer size of the fixing members 3 is the same, by changing the size, position, and the like of the wire guiding grooves 101a of the wire guiding jig 100A, it is possible to accommodate wires with different structures and outer diameters, fluctuations in the number of wires, fluctuations in the pitch between wires, and the like. In addition, when forming the sealing member 4, the outer diameter of the four fixing members 3A to 3D can be the same, so the injection molding molds (dies) for the sealing member 4 can be shared regardless of the wire configuration.
(d) Since the tearing portion 31a is formed in the fixing member 3 for each insulated wire 1A, when defects such as poor connection of the terminals of the core wire or poor terminal processing to strip the outer sheath occur after fixing the plurality of insulated wires 1A with the fixing member 3, only the defective insulated wire 1A' can be replaced via the tearing portion 31a.

### (Modified examples 1 to 4)

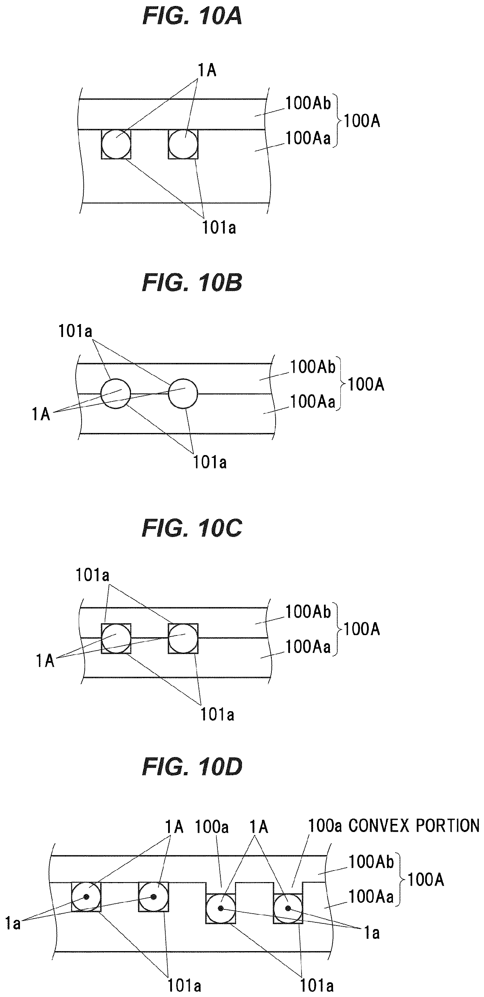

FIGS. 10A to 10D are main part front views of wire guiding jigs in modified examples 1 to 4, respectively. In the modified example 1 shown in FIG. 10A, the wire guiding groove 101a formed in the first jig 100Aa is rectangular in shape. According to the modified example 1, the processing of the wire guiding groove 101a is easier. In the modified example 2 shown in FIG. 10B, a semicircular wire guiding groove 101a with a radius of 1/2 of the outer diameter of the insulated wire 1A is formed in each of the first jig 100Aa and the second jig 100Ab. According to the modified example 2, the wire guiding grooves 101a can be adhered to the wires even when the outer diameters of the wires are different. In modified example 3 shown in FIG. 10C, the wire guiding groove 101a shown in FIG. 10B is rectangular. According to the modified example 3, the processing of the wire guiding groove 101a is easier. In the modified example 4 shown in FIG. 10D, some of the wire guiding grooves 101a in the first jig 100Aa are deepened in FIG. 10A. A convex portion 100a is formed at a point in the second jig 100Ab corresponding to the deepened wire guiding groove 101a. According to the modified example 4, by changing the depth of the wire guiding grooves 101a, the center line 1a of the insulated wire 1A can be shifted from the reference line 103 according to the connection target.

### [Second embodiment]

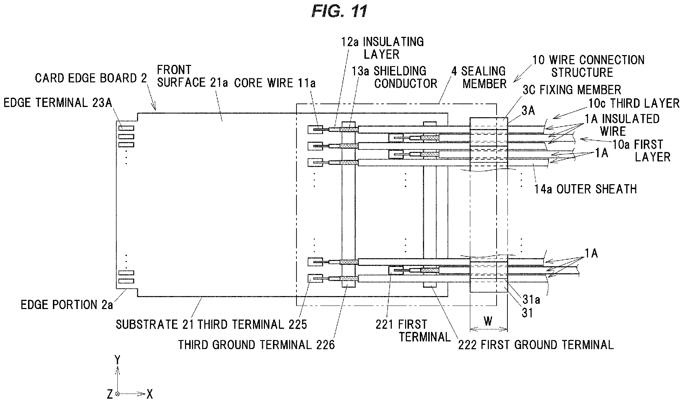

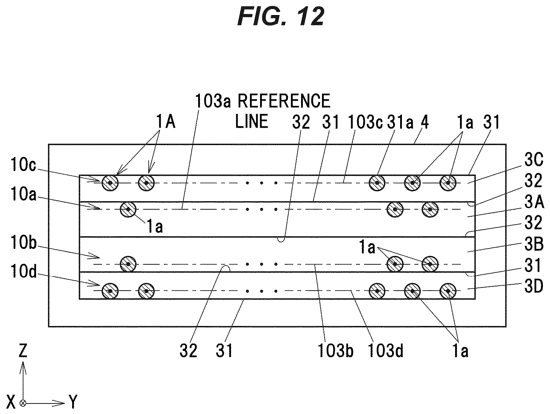

FIG. 11 is a plan view of the wire connection structure according to the second embodiment of the invention. FIG. 12 is a cross-sectional view corresponding to FIG. 3A. In the first embodiment, respective insulated wires 1A in the first layer 10a to the fourth layer 10d are arranged at the same position in the Y-direction as shown in FIG. 3A, but in this embodiment, as shown in FIG. 11, the insulated wires 1A in the first layer 10a and the second layer 10b are located between insulated wires 1A in the third layer 10c and the fourth layer 10d. The following is a description of the present embodiment, focusing on the points where it differs from the first embodiment.

The card edge board 2 has first terminals 221, a first ground terminal 222, second terminals 223, a second ground terminal 224, third terminals 225, a third ground terminal 226, fourth terminals 227, and a fourth ground terminal 228 as the first embodiment. However, in the present embodiment, the first terminals 221 are positioned between the third terminals 225 in the Y-direction, the second terminals 223 are positioned between the fourth terminals 227 in the Y-direction. In FIG. 11, the number of the first terminals 221 and the number of the second terminals 223 are one less than the number of the third terminals 225 and the number of the fourth terminals 227, but the same number may be used.

According to the second embodiment, the first terminals 221 are positioned between the third terminals 225, and the second terminals 223 are positioned between the fourth terminals 227 in the Y-direction, which facilitates the connection work of insulated wire 1A.

### [Third embodiment]

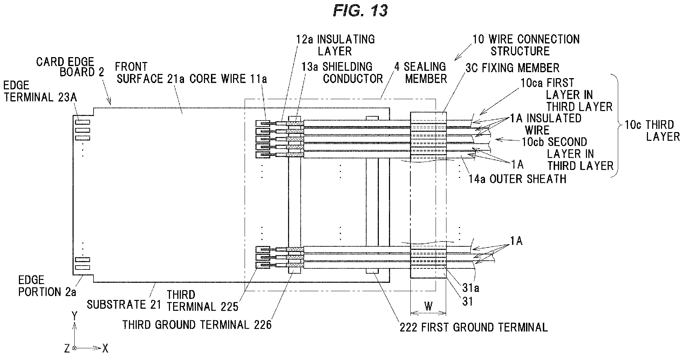

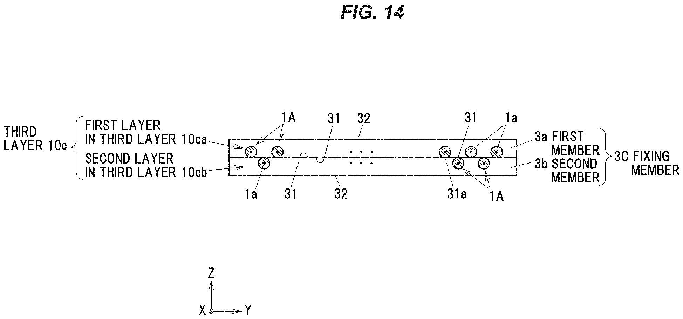

FIG. 13 is a plan view of a wire connection structure in the third embodiment of the invention. FIG. 14 is a main part cross-sectional view corresponding to FIG. 3A. FIG. 13 shows the insulated wires 1A in the third layer 10c. In the present embodiment, the number of the insulated wires 1A is increased from the first embodiment. The following is a description of this embodiment, focusing on the points where it differs from the first embodiment.

The third terminals 225 formed on the front surface 21a of the card edge board 2 are arranged at a predetermined pitch on the same line along the Y-direction, as shown in FIG. 13.

The plurality of insulated wires 1A constituting the third layer 10c are divided into a first group of plurality of insulated wires 1A constituting the first layer 10ca in the third layer 10c and a second group of a plurality of insulated wires 1A constituting the second layer 10cb in the third layer 10c so that the pitch of the insulated wires 1A is wider (for example, twice) than the pitch of the third terminals 225. The number of divisions is not limited to two, but may be three or more. The first group of plurality of insulated wires 1A constituting the first layer 10ca in the third layer 10c and the second group of plurality of insulated wires 1A constituting the second layer 10cb in the third layer 10c are each an example of wire groups.

The fixing member 3C for the third layer 10c is divided into a first member 3a corresponding to the first layer 10ca in the third layer 10c and a second member 3b corresponding to the third layer 10cb in the third layer 10c, as shown in FIG. 14. The number of divisions of the fixing member 3C is not limited to two, but may be three or more, as with the plurality of insulated wires 1A constituting the third layer 10c. The first member 3a secures the plurality of insulated wires 1A constituting the first layer 10ca in the third layer 10c at a position where the outer circumference surface of the insulated wire 1A is in contact with its own first surface 31. The second member 3b secures the plurality of insulated wires 1A constituting the second layer 10cb in the third layer 10c at a position where the outer circumference surface of the insulated wire 1A is in contact with its own first surface 31.

The first member 3a and the second member 3b are formed in the same manner as the fixing member 3C in the first embodiment, respectively. The sealing member 4 is formed in the same manner as in the first embodiment with the contact surfaces 30 of the first member 3a and the second member 3b in contact with each other.

According to the third embodiment, after soldering the core wires 11a of the plurality of insulated wires 1A constituting the first layer 10ca in the third layer 10c to the corresponding third terminals 225, the core wires 11a of the plurality of insulated wires 1A constituting the second layer 10cb in the third layer 10c can be soldered to the corresponding third terminals 225. Therefore, the mounting density of the terminals which are arranged on the same line in the Y-direction can be increased.

Although the third embodiment is described for the third layer 10c, the same configuration as the third layer 10c may be applied to the fourth layer 10d, or to the first layer 10a and the second layer 10b.

### [Fourth embodiment]

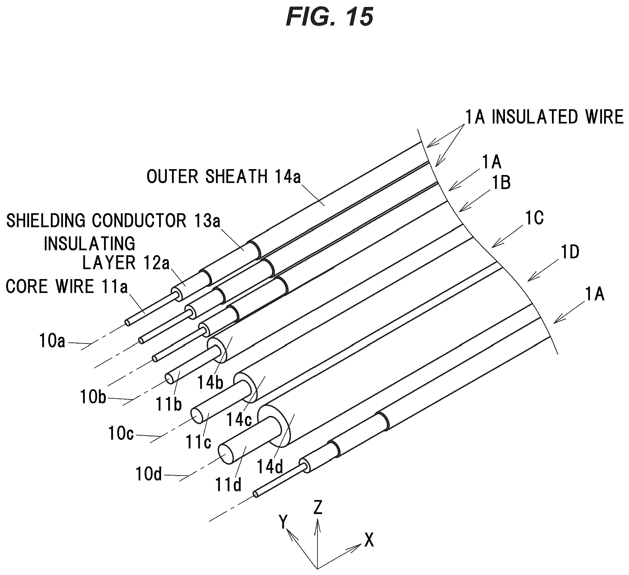

FIG. 15 is a perspective view showing an example of insulated wires used in the wire connection structure in the fourth embodiment of the present invention. In the first embodiment, the case in which a plurality of insulated wires 1A with the same outer diameter are used as the plurality of wires arranged in the first layer 10a to the fourth layer 10d was described, but the present embodiment is a case in which a plurality of insulated wires 1A to 1D with different outer diameters and structures in any or all layers of the first layer 10a to the fourth layer 10d. The following is a description of the present embodiment, focusing on the points where it differs from the first embodiment.

The insulated wire 1A is a coaxial wire, as in the first embodiment. Insulated wires 1B, 1C, and 1D are single wires that differ from each other in structure and outer diameter. The insulated wire 1B, for example, is a single wire with a relatively thin outer diameter, and has a core wire 11b formed from a conductor and an outer sheath 12b formed from an insulating material that covers the periphery of the core wire 11b. The insulated wire 1C is, for example, a single wire of medium outer diameter, with a core wire 11c formed from a conductor and an outer sheath 12c formed from an insulating material covering the periphery of the core wire 11c. The insulated wire 1D, for example, is a single wire with a relatively thick outer diameter, and has a core wire 11d formed from a conductor and an outer sheath 12d formed from an insulating material that covers the periphery of the core wire 11d. The core wires 11b, 11c, 11d are also thickened according to the outer diameters of the outer sheaths 14b, 14c, 14d.

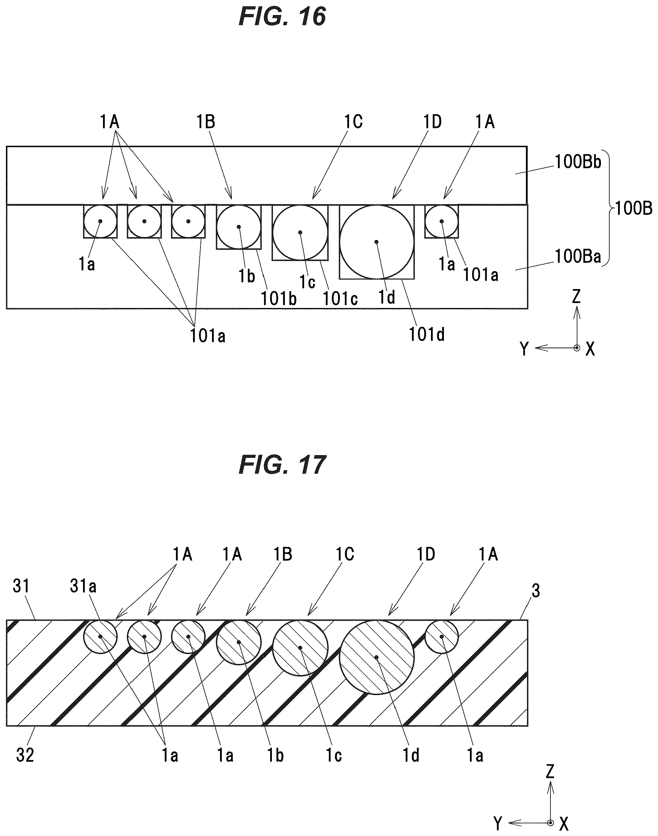

FIG. 16 is a main part front view of the wire guiding jig 100B. The wire guiding jig 100B has a first jig 100Ba with rectangular wire guiding grooves 101a to 101d according to the outer diameters of the insulated wires 1A to 1D, and a second jig 100Bb with a flat bar shape without wire guiding grooves. The wire guiding grooves 101a are formed with the same depth (Z-direction) and width (Y-direction) as the outer diameter of the insulated wires 1A to 1D to be placed. According to this configuration, the processing of the wire guiding grooves 101a to 101d is easier. In the present embodiment, the center lines 1a to 1d of the insulated wires 1A to 1D will have different positions in the Z-direction depending on the outer diameter of the insulated wires.

FIG. 17 is a cross-sectional view of a fixing member 3 along the Y-direction in the fourth embodiment. In FIG. 17, the insulated wires 1A to 1D are shown in simplified form. The fixing member 3 fixes respective insulated wires 1A to 1D at positions where the outer circumference surfaces of the respective insulated wires 1A to 1D contact their own first surfaces 31. A tearing portion 31a is formed on the first surface 31 for each insulated wire. The fixing member 3 is formed as follows. That is, a pair of wire guiding jigs 100B shown in FIG. 17 are arranged with a spacing d equal to the width W in the X-direction as in the first embodiment, and the insulated wires 1A to 1D corresponding to the wire guiding grooves 101a to 101d are placed. Next, a fixing member-mold having a cavity (first space) corresponding to the fixing member 3 is placed around the insulated wires 1A to 1D between a pair of wire guiding jigs 100B. As described in the first embodiment, the fixing member-mold uses a two-part structure as the base mold, and the wire guiding jig 100B is used as a nest device to be fitted into the base mold. Next, molten first resin (e.g., polyamide resin) is injected into the cavity (first space), and after the first resin cools and solidifies, the first mold is released. This forms the fixing member 3 shown in FIG. 17.

According to the fourth embodiment, the same effect as the first embodiment is achieved, and even when the outer diameters and arrangement pitches of the insulated wires differ, the ends of the core wires 11a to 11d and the terminals 221, 223, 225, 227 can be electrically connected at high density.

### [Fifth embodiment]

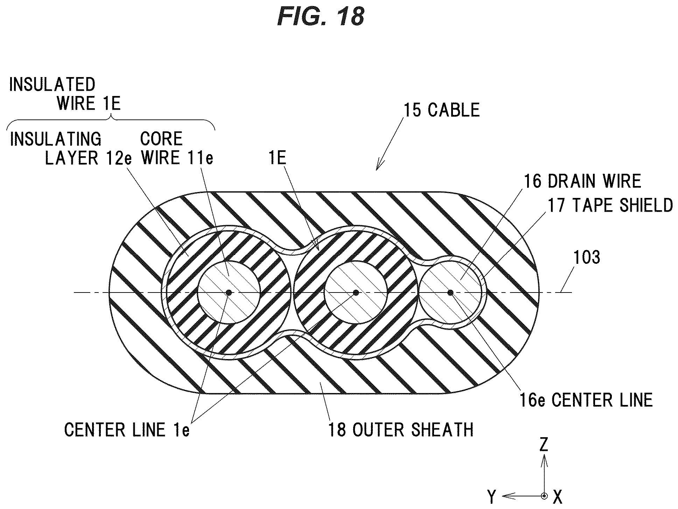

FIG. 18 is a cross-sectional view of the wires in the fifth embodiment of the invention. In the first to fourth embodiments, only insulated wires were used as wires. In the fifth embodiment, a plurality of insulated wires and the cable shown in FIG. 18 are used as wires.

A cable 15 used in the fifth embodiment includes a plurality (e.g., two) of insulated wires 1E, a drain wire 16, a tape shield 17 that collectively covers the outer circumference of the plurality of insulated wires 1E and the drain wire 16, and an outer sheath 18 made of an insulating material that covers the outer circumference of the tape shield 17. The tape shield 17 and the outer sheath 18 are made of an insulating material. The insulated wire 1E has a core wire 11e formed from a conductor and an insulating layer 12e that covers the outer circumference of the core wire 11e. The tape shield 17 is, for example, conductive tape wound in a spiral shape. The tape shield 17 is an example of a shield layer.

The fixing member 3 is formed by resin molding to fix the relative position between the wires so that the center line 1e of the two insulated wires 1E and the center line 16a of the drain wire 16 are located on the reference line 103 along the Y-direction and contact the outer circumference surface of the outer sheath 18 of the other insulated wires and the cable 15.

According to the fifth embodiment, the cable 15 is a side-drain type cable in which the drain wires 16 are arranged on the sides of the two insulated wires 1E. As compared to a center-drain type cable in which two drain wires 16 are arranged to contact the outer circumference surfaces of both the two insulated wires 1E. Since the cross-sectional shape can be made into an oval shape long in the Y-direction, the thickness of the fixing member 3 in the Z-direction can be made thinner. In addition, the drain wire 16 can be electrically connected to the terminals without bending in the Y-direction.

The above description is not limited to the above embodiments of the invention, but can be varied and implemented in various ways.

## Claims

1. A wire connection structure for electrically connecting ends of a plurality of core wires, each of which is exposed by stripping a coating at an end region of each of a plurality of wires arranged in parallel, to terminals corresponding to the plurality of wires, comprising:
a fixing member comprising a resin molded body that contacts outer circumference surfaces of the plurality of wires in a vicinity of the end region and fixes relative positions between the plurality of wires, with the plurality of wires being aligned parallel to each other in the vicinity of the end region,
wherein a tearing portion that can be torn along a longitudinal direction of the wires for being extremely thin or is torn along the longitudinal direction is formed for each wire at a part of a region contacting the outer circumference surface.

2. The wire connection structure, according to claim 1, wherein the plurality of wires are arranged in parallel in respective layers, and wherein the fixing member comprises fixing members provided for the respective layers.

3. The wire connection structure, according to claim 2, wherein the fixing members for the respective layers have a same outer size.

4. The wire connection structure, according to claim 1, further comprising:
a sealing member that covers the fixing member and watertightly seals a connection portion between the terminals and the ends of the plurality of core wires.

5. The wire connection structure, according to claim 3, further comprising:
a sealing member that collectively covers the respective fixing members provided in the respective layers and watertightly seals a connection portion between the terminals and the ends of the plurality of core wires.

6. The wire connection structure, according to claim 1, wherein the plurality of wires include a cable comprising two insulated wires, a drain wire, a shield layer that collectively covers an outer circumference of the two insulated wires and the drain wire, and an outer sheath composed of an insulating material that covers an outer circumference of the shield layer,
wherein the two insulated wires and the drain wire are arranged in a same direction as the plurality of wires are arranged in parallel, and the drain wire is located next to the two insulated wires.

7. The wire connection structure, according to claim 1, wherein the terminals are arranged at a predetermined pitch on a same line along a direction in which the plurality of wires are paralleled,
wherein the plurality of wires are divided into at least two wire groups so that a pitch of wires is wider than a pitch of the terminals,
wherein the fixing member is divided into at least a first member and a second member that fix relative positions between the wires constituting the at least two wire groups, respectively.

8. A manufacturing method of a wire connection structure for electrically connecting ends of a plurality of core wires, each of which is exposed by stripping a coating at an end region of each of a plurality of wires arranged in parallel, to terminals corresponding to the plurality of wires, the manufacturing method comprising:
arranging a pair of wire guiding jigs having a plurality of wire guiding grooves formed to correspond to respective outer diameters of the plurality of wires at a predetermined distance;
aligning the plurality of wires parallel to each other in the end region by placing the plurality of wires in the plurality of wire guiding grooves so that a vicinity of the end region is located between the pair of wire guiding jigs;
forming a fixing member by resin molding between the pair of wire guiding jigs to contact outer circumference surfaces of the plurality of wires in the vicinity of the end region and to form a tearing portion that can be torn along a longitudinal direction of the wires for being extremely thin or is torn along the longitudinal direction for each wire at a part of a region contacting the outer circumference surface, to fix relative positions between the plurality of wires;
removing the pair of wire guiding jigs from the plurality of wires; and
cutting the plurality of wires at a predetermined length position from the fixing member, stripping a coating at the end region of the plurality of wires on a cut side to expose the plurality of core wires, and connecting exposed ends of the plurality of core wires to the terminals,
wherein the cutting, stripping, and connecting are performed before or after the forming of the fixing member.

9. The manufacturing method, according to claim 8, wherein an injection mold having a space corresponding to the fixing member as a cavity is used as a base mold, and the pair of wire guiding jigs are used as a nest device to fit into the base mold to form the fixing member by injection molding.

10. A wire assembly, comprising:
a plurality of wires arranged in parallel;
a connection target having a plurality of terminals to which ends of a plurality of core wires exposed by stripping a coating at an end region of each of the plurality of wires are electrically connected;
a fixing member comprising a resin molded body that contacts outer circumference surfaces of the plurality of wires in a vicinity of the end region and fixes relative positions between the plurality of wires, with the plurality of wires being aligned parallel to each other in the vicinity of the end region,
wherein a tearing portion that can be torn along a longitudinal direction of the wires for being extremely thin or is torn along the longitudinal direction is formed for each wire at a part of a region contacting the outer circumference surface.
